# EUROPEAN PATENT APPLICATION

(11) **EP 2 226 759 A1**
(43) Date of publication of application: **08.09.2010**
(21) Application number: 08845703.1
(22) Date of filing: 27.10.2008
(51) Int. Cl.: G06Q 40/00, G06Q 20/00

(54) **ELECTRONIC SETTLEMENT METHOD AND ELECTRONIC SETTLEMENT DEVICE**

(30) Priority: 29.10.2007 JP 2007279733
(71) Applicant: Tanaka, Shin-Ichi, Kyoto 610-0357 (JP)
(72) Inventor: Tanaka, Shin-Ichi, Kyoto 610-0357 (JP)
(74) Representative: Eisenführ, Speiser & Partner
(86) International application number: PCT/JP2008/069440
(87) International publication number: WO 2009/057548

(57) **Abstract**

A method by which an electronic settlement device electronically transfers the monetary value of a predetermined amount from a first account to a second account comprises a first step (S54) of checking whether the second account is a specific account capable of identifying an account holder and a second step (S54) of, when the second account is recognized to be the specific account, electronically recording transfer log information in the form capable of identifying that the transfer destination is the specific account in a predetermined storage unit in association with the first account.

## Description

### Technical Field

The present invention relates to a method and a device for performing an electronic settlement process of monetary value with an account having a predetermined attribute.

### Background Art

Recently, even in private transactions, payments are often settled by electronic settlement. Various electronic transactions are carried out, such as electronic money of which usable value as money is electronically stored in an IC memory card and the like, and a credit card and a debit card with which a payment is performed directly from a bank account (see, for example, JP-A-10-124604).

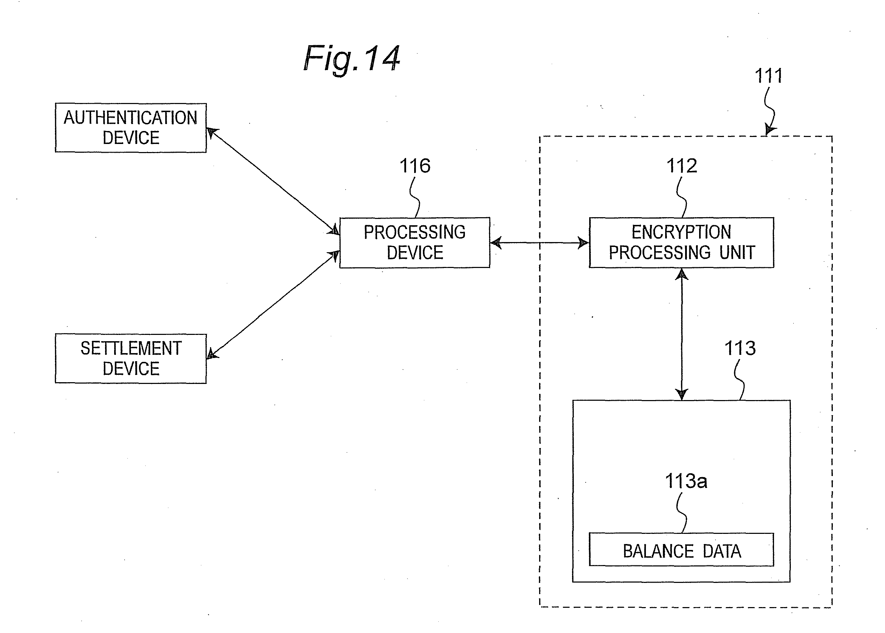

Fig. 14 shows a system configuration including a memory card storing conventional electronic money and a processing device thereof. An IC card 111 includes an encryption process unit 112 which encrypts and inputs or outputs authentication data of a user or data of a balance of electronic money and the like, and a memory 113 which stores a value of the electronic money as balance data 113a. The data in the IC card 111 is read by a processing device 116 set in an ordinary retail store and the like and updated as required.

A process when a user makes a payment using the electronic money is as follows.

The processing device 116 of the electronic money reads authentication information when the IC card 111 is inserted, and authenticates a user and electronic money information of the IC card 111. This authentication is performed by an authentication device in an authentication organization through a network. When they are authenticated, the processing device 116 transfers a value corresponding to an amount of payment in the value stored in the IC card 111 to the processing device 116. At this time, the balance data (value) 113a in the IC card 111 is updated (reduced).

Then, for example, a settlement device in a settlement organization such as a credit card company and the like receives settlement information from the processing device 116, and settles the payment made by the electronic money cooperating with a processing device in a financial institution.

Further, JP-A-3-191497 discloses a settlement method using a card electronically recorded with price data. Moreover, in network marketing, an electronic settlement is often used to allow a buyer himself to transfer an amount from his account to the seller's account.

### Disclosure of Invention

The conventional electronic settlement merely allows each transaction to be electronically settled without using cash, which provides an effect of merely making each transaction to be carried out more conveniently. No suggestion has ever been presented to achieve an macroeconomic effect when the electronic settlement once becomes a social infrastructure.

Under social circumstances such as economic depression in which people are worried about the future, people tend to be interested in saving money rather than spending it. Thus, the general consuming public would prefer to save money as much as possible by reducing spending.

When the propensity to consume decreases in this way, it is highly possible that the depression gets worse if the consumption tax is raised in order to prevent default of a nation, and there is not any effective means for financial reconstruction. It is generally known that the taxation system plays an important role as means for adjusting the economy. However, until today, no effective taxation system has ever been presented to increase the decreased propensity to consume to such a level as to enable increase of the consumption tax and introduction of environmental tax.

The present invention is made in view of the above problems, and it is an object to provide an electronic settlement method and a device therefor, wherein a new electronic settlement enables introduction of a taxation system that can dramatically increase the propensity to consume, and an effect of stimulating consumption can be expected while the convenience is enhanced.

### Means for Solving the Problem

In order to solve the above problem, an attribute of "specific account" is given to an account whose account holder can be reliably identified, and a transfer to this account is adopted as trustworthy expenditure. Therefore, the income and the trustworthy expenditure can be reliably measured. For this reason, a log of transfer to the specific account, including information indicating that the transfer recipient is the specific account, is electronically recorded, and they can be summarized as necessary.

In accordance with a first aspect, there is provided an electronic settlement method for causing an electronic settlement device to electronically transfer a predetermined amount of monetary value from a first account to a second account, the electronic settlement method including: a first step for inspecting whether the second account is a specific account of which account holder can be identified; and a second step for electronically recording log information about the transfer to a predetermined storage unit, while associating the log information with the first account in such a manner as to allow the transfer recipient to be identified as the specific account, when the second account is determined to be the specific account.

In the above first aspect, the log information of the transfer includes identification information of the account holder of the second account.

In accordance with a second aspect, there is provided an electronic settlement method for causing an electronic settlement device to electronically transfer a predetermined amount of monetary value from a first account to a second account, the electronic settlement method including: a first step for inspecting whether the first account is a specific account having functions for identifying an account holder of the specific account and receiving an electronically-transmitted electronic receipt; a second step for transmitting the electronic receipt from the second account to the first account, when the first account is a specific account; and a third step for receiving the electronic receipt transmitted from the second account, and electronically recording the received electronic receipt, in association with the first account to a predetermined storage unit.

In accordance with a third aspect, there is provided an electronic settlement device for electronically transfer a predetermined amount of monetary value from a first account to a second account, the electronic settlement device including: a processor for inspecting whether the second account is a specific account of which account holder can be identified, and when the second account is determined to be the specific account, electronically recording log information about a transfer to a predetermined storage unit while associating the log information with the first account in such a manner as to allow a transfer recipient to be identified as the specific account when the second account is determined to be the specific account of which account holder can be identified.

In the above third aspect, the log information of the transfer includes identification information of the account holder of the second account.

In the above third aspect, the processor has a function of calculating a summation of payments to the first account within a predetermined period and a summation of transfers to accounts having a predetermined attribute within a predetermined period.

In accordance with a fourth aspect, there is provided an electronic settlement device for electronically transfer a predetermined amount of monetary value from a first account to a second account, the electronic settlement device including: a processor for inspecting whether the first account is a specific account capable of receiving an electronically-issued electronic receipt, and when the first account is determined to be the specific account, transmitting an electronic receipt according to the electronically transferred amount from the second account to the first account.

In accordance with a fifth aspect, there is provided an electronic settlement device for electronically transfer a predetermined amount of monetary value from a first account to a second account, the electronic settlement device including: a processor, for electronically recording information about this electronic receipt to a predetermined storage unit while associating the information with the first account, when the first account receives a electronically-issued electronic receipt from the second account.

In the above fifth aspect, the processor has a function of calculating a summation of payments to the first account within a predetermined period and a summation of the received electronic receipts within a predetermined period.

In accordance with a sixth aspect, there is provided an electronic settlement method for causing an electronic settlement device to perform an electronic settlement between a predetermined bank account and a predetermined financial institution, the electronic settlement method including calculating a summation of amounts deposited to the predetermined bank account within a predetermined period; calculating a summation of amounts transferred within the predetermined period from the predetermined bank account to a bank account of which account holder is different from the account holder of the predetermined bank account; calculating a first amount by multiplying the summation or part of the transferred amounts by a first rate less than one; calculating a second amount by multiplying, by a second rate less than one, an amount obtained by deducting the summation of the transferred amounts from the summation of the deposited amounts; and executing processing for transferring a summation of the first amount and the second amount to the predetermined financial institution.

In the above sixth aspect, in the step for calculating the first amount, the first amount is calculated by multiplying, by the first rate, an amount obtained by deducting a predetermined deduction amount from the summation of the transferred amounts.

In the above sixth aspect, in the step for calculating the first amount, the first amount is calculated by multiplying the summation or part of the transferred amounts, by a rate obtained by subtracting a third rate less than the first rate from the first rate. In the step for calculating the first amount, the first amount is calculated by multiplying, by a rate obtained by subtracting a third rate less than the first rate from the first rate, an amount obtained by deducting a predetermined deduction amount from the summation of the transferred amounts.

In the above sixth aspect, the electronic settlement method further includes a step of performing either one of: a processing for transferring an amount obtained by multiplying a predetermined deduction amount by the third rate, from the predetermined financial institution to the predetermined bank account; and a processing for offsetting the amount obtained by multiplying the predetermined deduction amount by the third rate with an amount transferred from the predetermined bank account to the predetermined financial institution.

In the above sixth aspect, in the step for calculating the summation of the transferred amounts, in a case where the transfer recipient is an account of a credit card company, an amount of a transfer is included in the summation only when a recipient of the transfer from the credit card company satisfies a predetermined condition.

In accordance with a seventh aspect, there is provided an electronic settlement device for performing an electronic settlement between a predetermined bank account and a predetermined financial institution, the electronic settlement device including: a unit for calculating a summation of amounts deposited to the predetermined bank account within a predetermined period; a unit for calculating a summation of amounts transferred within the predetermined period from the predetermined bank account to a bank account of which account holder is different from the account holder of the predetermined bank account; a unit for calculating a first amount by multiplying the summation or part of the transferred amounts by a first rate less than one; a unit for calculating a second amount by multiplying, by a second ratio less than one, an amount obtained by subtracting the summation of the transferred amounts from the summation of the deposited amounts; and a unit for executing processing for transferring a summation of the first amount and the second amount to the predetermined financial institution.

In the above seventh aspect, the unit for calculating the first amount calculates the first amount by multiplying, by the first rate, an amount obtained by deducting a predetermined deduction amount from the summation of the transferred amounts.

In the above seventh aspect, the unit for calculating the first amount calculates the first amount by multiplying, by a rate obtained by subtracting a third rate less than the first rate from the first rate, the summation of the transferred amounts or a portion thereof.

In the above seventh aspect, the unit for calculating the first amount calculates the first amount by multiplying, by a rate obtained by subtracting a third rate less than the first rate from the first rate, an amount obtained by deducting a predetermined deduction amount from the summation of the transferred amounts.
In the above seventh aspect, the electronic settlement device further includes a unit for performing either one of: a processing for transferring an amount obtained by multiplying the predetermined deduction amount by the third rate, from the predetermined financial institution to the predetermined bank account; and a processing for offsetting the amount obtained by multiplying the predetermined deduction amount by the third rate with an amount transferred from the predetermined bank account to the predetermined financial institution.

In the above seventh aspect, in a case where the transfer recipient is an account of a credit card company, the unit for calculating the summation of the transferred amounts causes an amount of a transfer to be included in the summation only when a recipient of the transfer from the credit card company satisfies a predetermined condition.

### Effect of the Invention

According to the above aspects, when an amount is transferred from a predetermined account to an account whose account holder can be identified and which has a predetermined attribute, the transfer is electronically recorded in such a manner as to indicate that the transfer recipient has the predetermined attribute, so as to measure the increase of the amount transferred to the account having the predetermined attribute within a predetermined period. Therefore, it is possible to perform processing for deducting, from the taxable income, the payments to the accounts having the specific attribute. As a result, it is considered that people would actively consume money, and therefore, the above aspects can increase the demand by guiding consumer consumption.

### Best Mode for Carrying Out the Invention

An embodiment of an electronic settlement method will be described in detail with reference to the following attached drawings.

### First Embodiment

### 1. System Configuration

When a processing device used in an electronic settlement system transfers an amount to an account of a transfer recipient by electronic settlement, and when the account is a "specific account" whose account holder of the transfer recipient can be reliably identified, the processing device records, in association with the account of the transfer source, the log of transfer including information indicating that the transfer recipient is the specific account. Alternatively, the account of the transfer recipient may issue an electronic receipt to the account of the transfer source, and the processing device may record the information of the electronic receipt. In this way, expenses that can be reliably identified as consumption of expenses propensity to consume processed by the electronic settlement can be accurately measured. It is expected to be possible to boost the propensity to consume and activate the economy by deducting at least a portion of the accurately measured consumption from the taxable income.

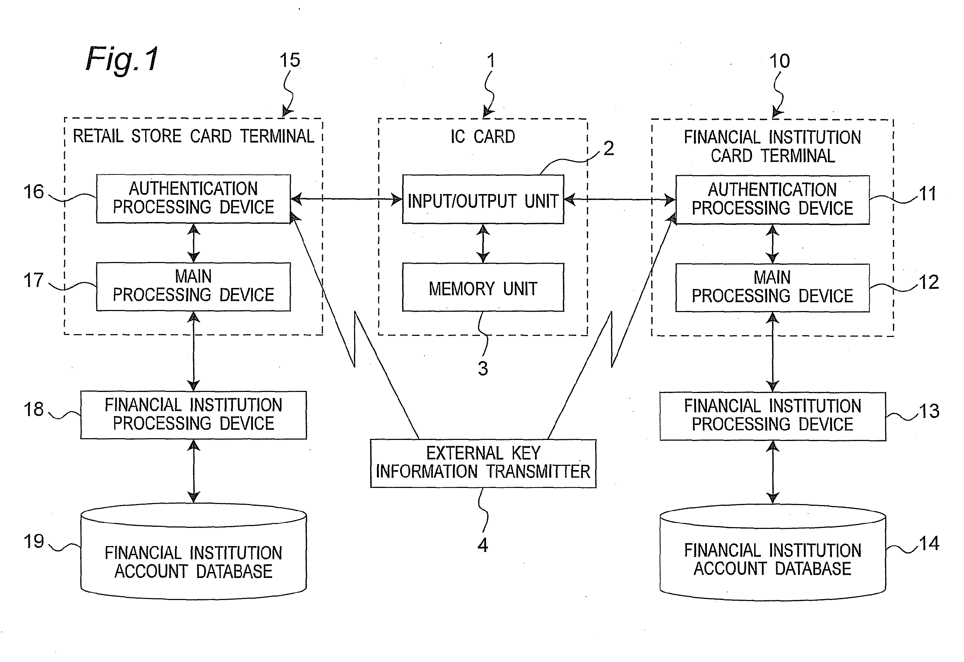

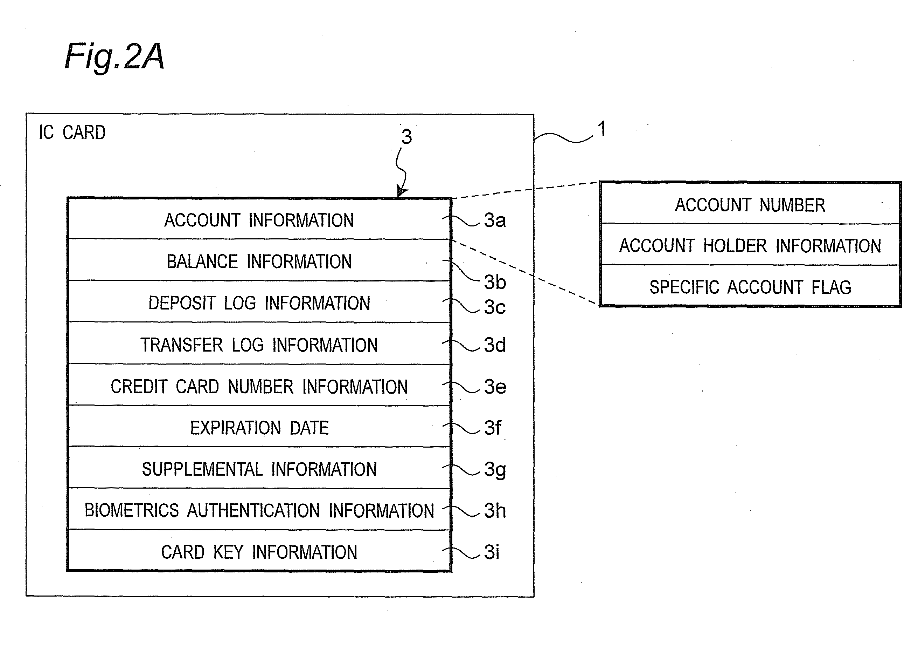

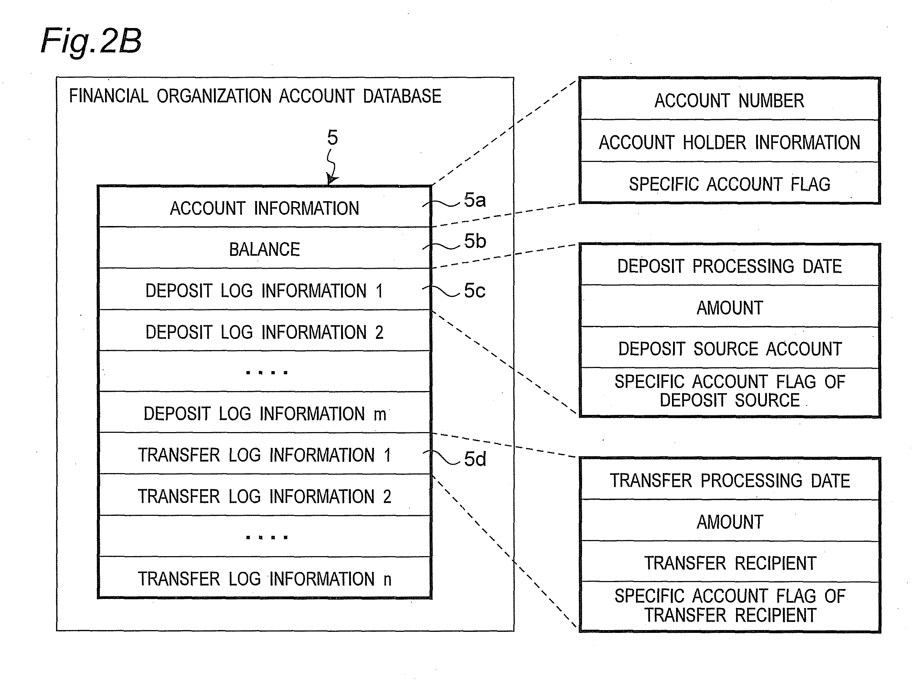

The configuration of the electronic settlement system will be explained with reference to Fig. 1, Fig. 2A, and Fig. 2B. In the below explanation, the "specific account" means an account whose account holder is reliably identified. Only when the owner of the account can be identified, such account is registered as the specific account. For example, the account holder can be identified by using conventionally-used means, for example, making confirmation by sending a postal mail to the registered address in order to confirm the address or asking the account holder to present a license or an insurance certificate. In addition, the specific account may be an account having a function to send and receive electronic receipts. Also, in this case, it is to be understood that the account holder should be reliably identified in order to issue an electronic receipt. The "account" referred to herein means not only a bank account of a financial institution but also an IC card which serves as an account in the broad sense as long as the owner of the IC card can be identified when the IC card is used to perform electronic settlement, and this IC card alone can be registered as a specific account. In this case, the issuing company of the IC card manages the IC card as the specific account, and the account holder is the owner of the card.

In Fig. 1, the electronic settlement system includes a financial institution card terminal 10 and a retail store card terminal 15, which can process an IC card 1. The IC card 1 includes an input/output unit 2 for sending and receiving information to and from the card terminals 10, 15 and a memory unit 3 for memorizing information.

The input/output unit 2 sends and receives information to and from the card terminals 10, 15 and the memory unit 3, stores information transmitted from the card terminals 10, 15 to the memory unit 3, and transmits information read from the memory unit 3 to the card terminals 10, 15.

As shown in Fig. 2A, the memory unit 3 of the IC card 1 stores information 3a to 3h as follows.

Account information (3a) : The account information includes information about an account number and the account holder of the account and information capable of distinguishing whether the account is a specific account or not (specific account flag).

Balance information (3b) : The balance information is information representing a balance that can be used as electronic money.

Deposit log information (3c) : The depositlog information records a log of deposit to the electronic money stored in the IC card 1. The deposit log information includes an account of a deposit source, an amount, a date, and the like. When the account of the deposit source is the specific account of which account holder can be identified, the deposit log information also stores that the money is deposited from the specific account.

Transfer log information (3d) : The transfer log information records a log of transfer of electronic money stored in the IC card 1. The transfer log information includes information such as an account of a transfer recipient, an amount, a date, and the like. When the account of the payment recipient is a specific account of which account holder can be identified, the transfer log information also stores that the money is transferred to the specific account.

Credit card number information (3e) : The credit card number information is information representing a credit card number when the IC card 1 is used as a credit card.

Expiration date information (3f) : The expiration date information is information representing an expiration date when the IC card 1 is used as a credit card.

Supplemental information (3g) : The supplemental information includes various kinds of information associated with an account holder. The supplemental information includes information about a point membership of a retail distributer, information about a commuting pass for transportation, information about ticket barrier clearance, and the like.

Biometrics authentication information (3h) : The biometrics authentication information is information prepared by encrypting data representing biometrics feature of an owner, using a predetermined system key, so that the information is used to perform biometrics authentication in order to ensure security of the use of the IC card 1.

Card key information 3i(3i) : The card key information is information prepared by encrypting a card key, which is used to encrypt information 3a to 3g of the memory unit 3. The card key information includes information about the card key encrypted with a biometrics authentication key associated with the biometrics authentication information and information encrypted by an external key input from the outside.

An external key information transmitter 4 wirelessly transmits information including the above external key, and can easily authenticate that the operator is the account holder of the IC card 1 (a person who carries the external key information transmitter 4) without using the biometrics authentication.

The financial institution card terminal 10 includes a financial institution authentication processing device 11 and a financial institution terminal processing device 12. The financial institution terminal processing device 12 authenticates to determine whether the IC card 1 is genuine and whether the operator is the account holder of the IC card 1. When the authentication is successfully completed by the financial institution authentication processing device 11, the financial institution terminal processing device 12 performs processing for charging electronic money to the IC card 1 according to an instruction of the operator.

A financial institution processing device 13 is requested by the financial institution terminal processing device 12 to transfer an amount to the IC card 1, the financial institution processing device 13 searches the financial institution account database 14 to inspect a balance of a bank account associated with the IC card 1. When the requested transfer amount is equal to or less than this balance, the financial institution processing device 13 performs transfer processing according to the above request.

The retail store card terminal 15 includes a retail store authentication processing device 16 and a retail store terminal processing device 17. The retail store authentication processing device 16 performs authentication to determine whether the IC card 1 is genuine and whether the operator is the account holder of the IC card 1. When the authentication is successfully completed by the retail store authentication processing device 16, the retail store terminal processing device 17 performs settlement processing for payment.

When the financial institution processing device 18 receives a notification signal of settlement from the retail store terminal processing device 17, the financial institution processing device 18 searches the financial institution account database 19, and performs deposit processing to deposit an amount to an account being in cooperation with the retail store card terminal 15.

Subsequently, a usage of the electronic settlement system according to the present embodiment will be explained.
When a bank account of a financial institution is registered as a specific account, the specific account information is registered to a financial institution account database associated with this account. Fig. 2B shows specific account information managed in a financial institution account database according to the present embodiment. As shown in Fig. 2B, the specific account information manages account information 5a, a balance 5b of the account, deposit log information 5c about a log of deposit to the account, and transfer log information 5d about a log of transfer from the account. It should be noted that the specific account information may include other information.

An account number, account holder information of the account (name, address, and the like of the account holder), and a flag indicating whether the account is a specific account (specific account flag) are recorded as the account information 5a. The account information 5a may include code information for identifying the account holder. A resident register code of the Basic Resident Register, a taxpayer identification number in the United States, and the like may be used as the code information. When the account holder is a corporation, a corporation ID and the like may be used as the code information. By recording this code information, it is possible to reliably execute operation for consolidating data of a plurality of accounts when an account holder has the plurality of accounts. It should be noted that instead of the specific account flag, any form of flag can be used as long as it is information indicating whether the account is a specific account or not.

Further, the deposit log information 5c and the transfer log information 5d of the account are recorded in the specific account information. The log information 5c, 5d includes information (specific account flag) indicating whether a recipient account is a specific account or not.

In general, a bank account of a financial institution is used as a specific account. However, an IC card alone capable of storing electronic money can serve as a specific account. In this case, the owner of the card is the account holder of the account.

When the IC card is caused to cooperate with a bank account which is a specific account, and the deposit log and the transfer log temporarily stored to the IC card are transferred to the database of the bank account in cooperation, and they may be deemed as an integral specific account.

Any deposit to the specific account is deemed as an income, and any transfer to another specific account including a transfer via an IC card can be deemed as an expense. As a result, incomes and expenses in a certain period can be accurately measured.

When the total income and the total expense can be accurately measured, this can be applied to the taxation system. For example, an introduction of taxation system in which an expense is deducted from an income would achieve an effect of expanding financial institution. At this occasion, the expense can be spoofed when the aggregate calculation of the expense includes a transfer to an account whose account holder is not identified. To prevent this spoofing, the aggregate calculation may include only transfers to specific accounts whose account holders are reliably identified, and this aggregate calculation of only the specific accounts may be deemed as the expense. Therefore, the above spoofed expense can be eliminated, and this can be easily applied to the taxation system.

### 2. Flow of Electronic Settlement

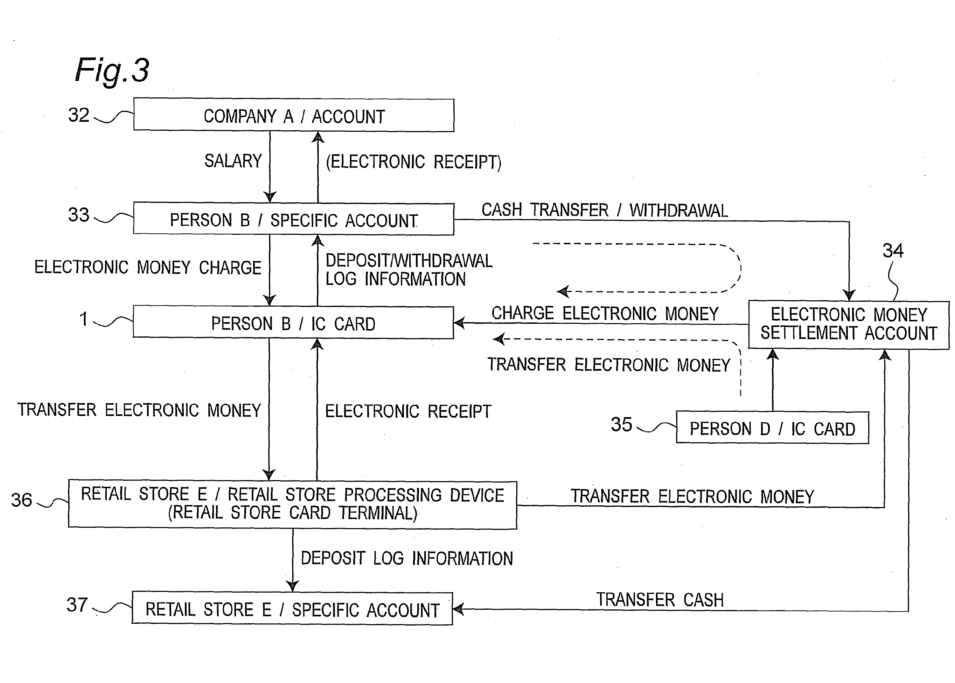

Fig. 3 is a figure for explaining a flow of settlement processing performed by the electronic settlement. In this explanation, a person B is assumed to be an employee of a company A. The company A is assumed to be an account holder of an account 32. The person B is assumed to be an account holder of the account (specific account) 33. Further, in this example, each of the accounts 32 and 33 are assumed to be managed by a respectively different financial institution processing device (hereinafter simply referred to as "processing device"), but may be managed by the same processing device.

The company A transfers a salary of the person B by transferring an amount from the account 32 to the account 33. At this occasion, the processing device for the account 33 receives account information about the account 32 from the processing device for the account 32, and inspects whether the account 32 is a specific account capable of receiving an electronic receipt. When the account 32 is determined to be a specific account, the processing device for the account 33 transmits an electronic receipt to the processing device for the account 32. When the account 32 is determined to be a specific account, the processing device for the account 32 electronically records information about this electronic receipt as transfer log information to the financial institution account database as specific account information about the specific account 32. In addition, the processing device for the account 33 electronically records information about the above electronic receipt as a deposit log to the financial institution account database as specific account information about the specific account 33.

The IC card 1 owned by the person B can be charged with electronic money. When the processing device for the account 33 is given an instruction to charge electronic money to the IC card 1, this processing device executes charging operation of electronic money and transfers a corresponding amount to an electronic money settlement account 34. At this occasion, the electronic money settlement account 34 is managed by a predetermined processing device. Further, the IC card 1 may be directly charged with electronic money from the processing device for the electronic money settlement account 34. In this case, when the processing device for the electronic money settlement account 34 is given an instruction to charge electronic money, this processing device inquires of the processing device for the account 33 about the balance of the specific account 33. When the balance is sufficient, this processing device withdraws the instructed amount from the specific account 33, and charges the same amount of electronic money to the IC card 1. The processing device of the specific account 33 reduces the balance of the specific account 33 by the same amount as the charged amount.

The person B may also receive payment by electronic money from a person D. In this case, the person D instructs the processing device for the electronic money settlement account 34 to pay electronic money from an IC card 35 to the IC card 1. The processing device for the electronic money settlement account 34 moves the same amount of the electronic money as the instructed amount from the IC card 35 connected thereto to the IC card 1, and records a deposit log together with information capable of identifying the person D to the deposit log information 3c.

When the person B goes shopping in a retail store E, the IC card 1 is connected to a retail store processing device 36 installed in the retail store E by a contact method or a non-contact method. The retail store processing device 36 reads the balance amount of electronic money recorded in the balance information 3b of the IC card 1 to determine whether the balance amount is sufficient. When the balance amount is sufficient, an amount corresponding to the payment amount is withdrawn from the balance amount of electronic money recorded in the balance information 3b of the IC card 1, information about the payment amount of electronic money is transmitted to the processing device for the electronic money settlement account 34, and a transfer log is recorded to the transfer log information 3d of the IC card 1. When the processing device for the electronic money settlement account 34 receives the information about the payment amount of electronic money thus transmitted, the processing device for the electronic money settlement account 34 transfers the same amount as the payment amount to a specific account 37 in the retail store E. As a result of this transfer, specific account information of the specific account 37 is updated in the financial institution account database.

### 3. Processing in Electronic Settlement System

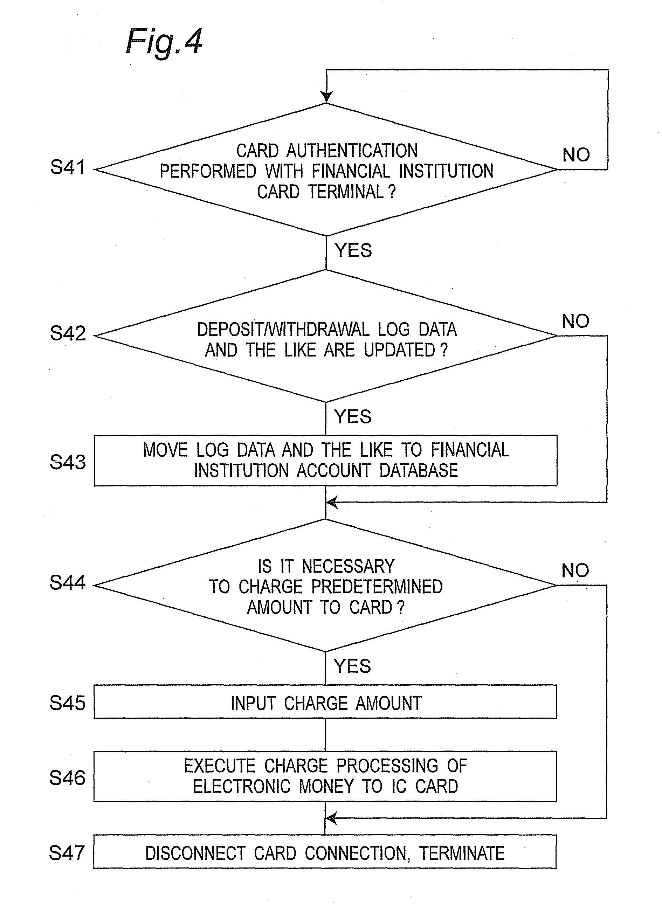

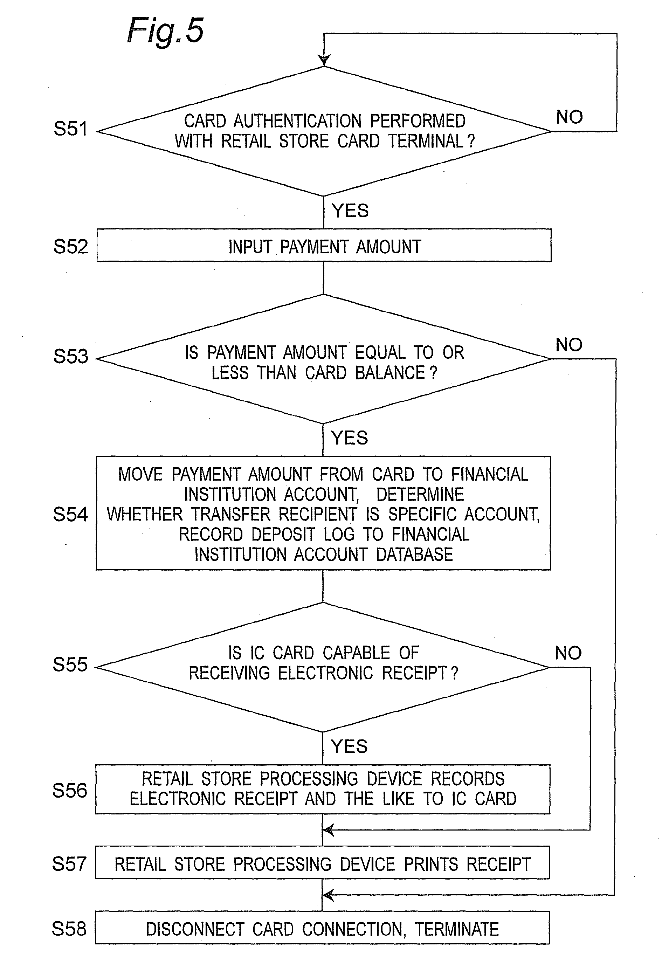

Regarding the electronic settlement system thus structured, the processing in the financial institution card terminal 10 and the retail store card terminal 15 will be explained with reference to flowcharts of Fig. 4 and Fig. 5.

First, the following case will be explained with reference to Fig. 4. Cash is withdrawn from the account 33 of which account holder is the person B, and then electronic money is charged to the IC card 1 owned by the person B. The account 33 is assumed to be a specific account.

The person B electronically connects the IC card 1 via the input/output unit 2 to the financial institution card terminal 10 of the financial institution managing the specific account 33. The method of connection may be either contact method or non-contact method. When the IC card 1 is connected, the authentication processing device 11 of the financial institution card terminal 10 reads external key information transmitted from the external key information transmitter 4, and decrypts an encryption of a portion, encrypted by the external key, in the card key information 3i read from the memory unit 3 of the IC card 1, thus generating a card key. When the external key information cannot be read, the operator is required to perform biometrics authentication. In other words, the authentication processing device 11 reads biometrics information from the iris or the hand of the operator placed over the authentication processing device 11, and collates the read biometrics information with biometrics information prepared by decrypting information recorded in biometrics authentication information 3h using a predetermined system key. When the authentication processing device 11 finds a certain level of consistency for the biometrics information, the authentication processing device 11 generates the card key by decrypting, a portion of the card key information 3i that is encrypted with a predetermined biometrics authentication key using this biometrics authentication key. When the card key is correctly generated in this way, the IC card 1 and the operator are authenticated and determined to be genuine (S41).

When the IC card 1 is determined to be genuine and the operator is authenticated as the owner thereof, the authentication device 11 further reads at least a portion of information from the memory unit 3 of the IC card 1, decrypts this with the above card key, and transmits the decrypted portion of information to the main processing device 12. The main processing device 12 inspects whether data are stored in the deposit log information 3c and the transfer log information 3d of the IC card 1 and whether the supplemental information 3g is updated or not (S42). When data are recorded in the log information 3c, 3d, financial institution processing device 13 electronically records data of the log information 3c, 3d to the financial institution account database 14 as specific account information of the account 33, and further deletes data stored in the deposit log information 3c and the transfer log information 3d of the IC card 1. When the supplemental information 3g is updated, the financial institution processing device 13 also synchronizes and updates the financial institution account database 14 (S43).

Subsequently, the financial institution card terminal 10 inquires of the operator whether it is necessary to charge electronic money (S44). When the operator needs to charge electronic money, the amount is input to the financial institution card terminal 10 (S45). When the balance amount of the account 33 is sufficient, the financial institution card terminal 10 rewrites the balance information 3b of the IC card 1 to charge a specified amount of electronic money, and instructs the financial institution processing device 13 to transfer the same amount to the electronic money settlement account 34. The financial institution processing device 13 executes transfer processing according to this instruction (S46). When the series of processings is completed in this way, the financial institution card terminal 10 disconnects connection with the IC card 1, and terminates processing (S47).

Subsequently, a case where the person B goes shopping in the retail store E using the above electronic money will be explained with reference to Fig. 5. The retail store E has an account 37 that is a specific account.

The person B electrically connects the IC card 1 to the retail store processing device 36 via the input/output unit 2. It should be noted that the retail store processing device 36 includes the retail store card terminal 15 to which the IC card 1 is connected. In this case, the method of connection may be either contact method or non-contact method. When the IC card 1 is connected, the authentication processing device 16 of the retail store card terminal 15 reads an external key transmitted from the external key information transmitter 4, and decrypts an encryption of a portion encrypted by the external key, in the card key information 3i read from the memory unit 3 of the IC card 1, thus generating a card key. When the card key is correctly generated, the IC card 1 is authenticated as a genuine IC card. When the external key information cannot be read, the operator is requested to carry out biometrics authentication. When the authentication processing device 16 reads biometrics information from the iris or the hand of the operator placed over the authentication processing device 16, the authentication processing device 16 collates the read biometrics information with biometrics information prepared by decrypting information recorded in the biometrics authentication information 3h using a predetermined system key. When the authentication processing device 16 finds a certain level of consistency for the biometrics information, the authentication processing device 16 generates the card key by decrypting, using this biometrics authentication key, a portion of the card key information 3i that is encrypted with a predetermined biometrics authentication key. When the card key is correctly generated in this way, the IC card 1 and the operator are authenticated and determined to be genuine (S51).

When they are correctly authenticated, the payment amount is input to the retail store processing device 36 (S52). The payment amount may be input using a ten key, or a total sum may be transferred from a so-called POS system that reads product information using a barcode reader. The retail store processing device 36 reads the balance information 3b from the IC card 1, and inspects whether the amount of the balance information 3b is equal to or more than the payment amount (S53).

When the amount of the balance information 3b is equal to or more than the payment amount, the retail store processing device 36 withdraws electronic money equivalent to the payment amount from the IC card 1. In other words, the retail store processing device 36 reduces the balance information 3b by the equivalent amount to rewrite the balance information 3b, and transfers the amount information for the reduced electronic money and information about the account 37 in the retail store to the processing device for the electronic money settlement account 34. When the processing device for the electronic money settlement account 34 receives the amount information of the electronic money, the processing device for the electronic money settlement account 34 increases the balance of the account 37. As a result, the equivalent amount is transferred to the account 37. The processing device for the account 37 obtains the account information for the account 37 from the financial institution account database, and determines whether the account 37, i.e., the recipient of the transfer, is a specific account or not, based on the obtained account information. Since the account 37 is a specific account, the processing device for the account 37 electronically records log information about the above deposit as specific account information for the account 37 to the financial institution account database (S54). In this way, cash equivalent to the payment amount is substantially transferred from the IC card 1 to the specific account 37 in an electronic manner.

Further, the retail store processing device 36 reads the account information 3a of the IC card 1, and inspects whether the IC card 1 can receive and record an electronic receipt (S55). When the IC card 1 is determined to be capable of receiving an electronic receipt, the retail store processing device 36 issues an electronic receipt, and records this as the transfer log information 3d to the IC card 1 (S56). Further, the retail store processing device 36 inspects the supplemental information 3g, and when the owner of the IC card 1 is a point card member of the above retail store, the retail store processing device 36 adds a point according to the purchased amount to rewrite the supplemental information 3g. Subsequently, the retail store processing device 36 prints and outputs a receipt (S57), disconnects connection with the IC card 1, and terminates the processing (S58).

By updating the specific account information of the financial institution account database 14 as described above, the financial institution account database 14 records all the logs of deposits for the specific account within a predetermined period and all the logs of transfers to other specific accounts. Therefore, a list of these logs within the predetermined period and the summation thereof can be printed and output or can be electronically output as a file. These outputs can be used as evidences for deduction in tax payment.

### Second Embodiment

Another embodiment of the electronic settlement system will be explained. In the present embodiment, instead of using electronic money, a so-called debit card method is used, in which settlement processing is performed by transfer from a bank account.

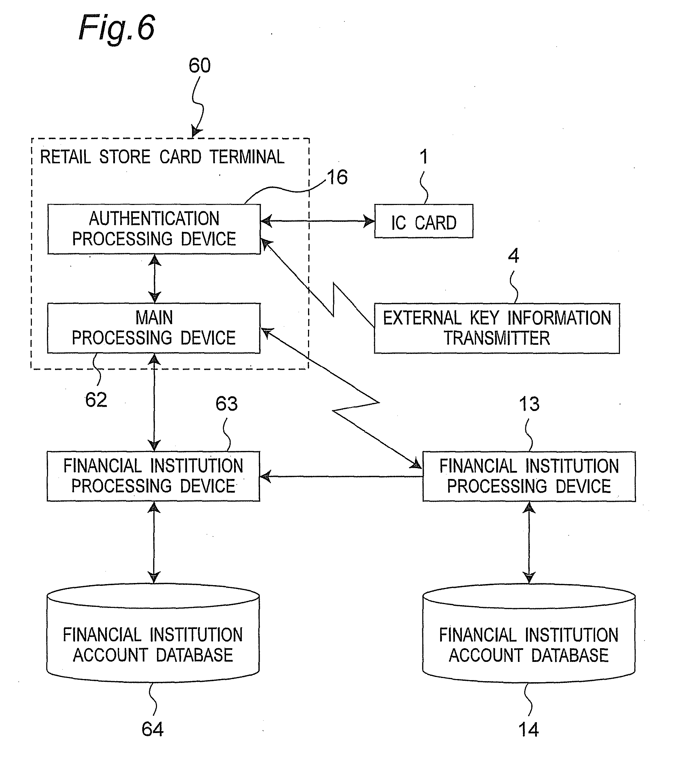

Fig. 6 shows a configuration of the electronic settlement system according to the present embodiment. A retail store card terminal 60 according to the present embodiment supports settlement by debit card method, and includes the authentication processing device 16 and a main processing device 62. The authentication processing device 16 may be the same as the authentication processing device 16 according to the first embodiment. The financial institution processing device 13 and the financial institution account database 14 are the same as those of the first embodiment. The financial institution processing device 63 and the financial institution account database 64 belong to the financial institution in which the specific account of the above retail store is placed.

When the IC card 1 is correctly authenticated, the main processing device 62 of the retail store card terminal 60 communicates with the financial institution processing device 13 for the specific account indicated by the information recorded in the account information 3a of the IC card 1, and instructs the financial institution processing device 13 to transfer the purchased amount from the above specific account to the specific account of the above retail store. The financial institution processing device 13 performs transfer processing to the financial institution processing device 63 managing the specific account in the above retail store.

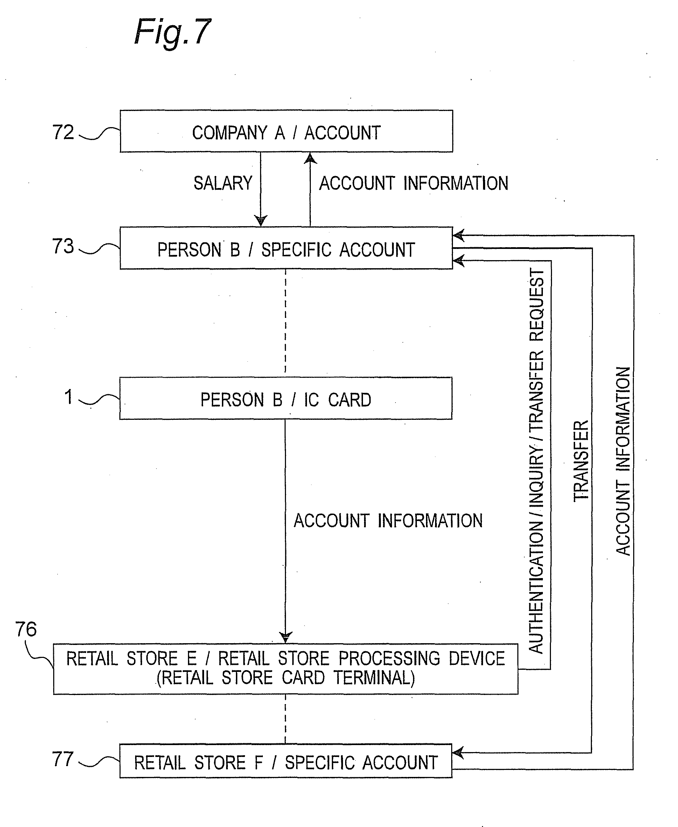

The overview of electronic settlement processing according to the present embodiment will be explained using Fig. 7.

Like the first embodiment, the company A is assumed to be the account holder of an account 72, and the person B is assumed to be the account holder of an account (specific account) 73. Each of the accounts 72 and 73 is assumed to be managed by a respectively different processing device, but may be managed by the same processing device. The company A transfers a salary of the person B by transferring an amount from the account 72 to the specific account 73. At this occasion, the processing device for the account 72 receives account information about the account 73 from the processing device for the account 73, and inspects whether the account 73 is a specific account. When the account 73 is determined to be a specific account, the processing device for the account 72 records the result of transfer including information indicating the transfer to the specific account (specific account flag) as a transfer log of the specific account information of the account 72 to the financial institution account database. On the other hand, the financial institution processing device 13 for the specific account 73 records the above transfer information as a deposit log of the specific account information of the account 73 to the financial institution account database 14.

When the person B pays a predetermined amount of purchase price at a retail store F, the IC card 1 owned by the person B is electronically connected to a retail store processing device 76. The retail store processing device 76 includes the retail store card terminal. The retail store processing device 76 uses the biometrics authentication information or the external key information transmitted from the external key information transmitter 4 to perform authentication and determine that the IC card 1 is genuine and the operator is the genuine owner, and further, the retail store processing device 76 generates a card key.

When the above authentication is successfully completed, the retail store processing device 76 communicates with the financial institution processing device 13 for the account 73 recorded in the IC card 1, performs authentication of the IC card 1 again, and thereafter looks up the balance of the account 73. When the balance is determined to be equal to or more than the purchased amount, the retail store processing device 76 instructs the financial institution processing device 13 to transfer the designated amount to an account 77 in the retail store F. The account 77 is a specific account.

The financial institution processing device 13 transfers the designated amount to the account 77, i.e., the specific account (in other words, increases the balance of the account 77 by the designated amount), and reads the account information of the account 77. When the account 77 is determined to be the specific account based on the read account information, the financial institution processing device 13 records the log information about the above transfer as the specific account information of the account 73, together with information indicating that the transfer recipient is the specific account, to the financial institution account database 14.

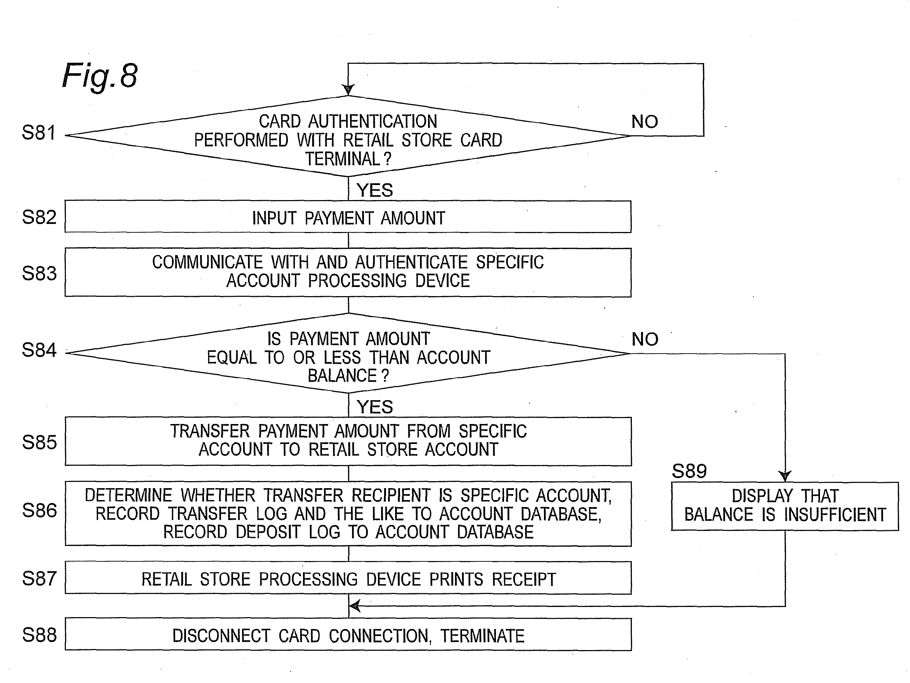

The above processing will be explained using the flowchart of Fig. 8.

When the IC card 1 is electronically connected to the retail store card terminal of the retail store processing device 76 in order for the person B to pay a predetermined amount of purchase price at the retail store F, the retail store processing device 76 performs authentication to determine that the IC card 1 is genuine and the user is genuine owner (S81).

When the predetermined amount is input to the retail store processing device 76 (S82), the retail store processing device 76 communicates with the financial institution processing device 13 for the specific account 73, based on account information 3a recorded in the IC card 1, and performs authentication again (S83). When the authentication is completed, the retail store processing device 76 looks up the balance of the specific account 73 to determine whether the balance is equal to or more than the predetermined amount (S84).

When the balance is equal to or more than the predetermined amount, the retail store processing device 76 instructs the financial institution processing device 13 for the account 73 to transfer the predetermined amount to the account (specific account) 77. The financial institution processing device 13 transfers the predetermined amount from the account 73 to the account 77 according to this instruction (S85). In other words, the balance of the account 73 is reduced, and the balance of the account 77 is increased.

When the above transfer processing is completed, the financial institution processing device 13 for the account 73 electronically records information for distinguishing whether the account of the transfer recipient is the specific account or not to the financial institution account database 14 as transfer log information. When a company identification code is attached, the electronically recorded transfer log information includes information about the company identification code. In other words, the financial institution processing device 13 for the account 73 determines whether the account 77, i.e., the transfer recipient, is the specific account or not, based on the account information obtained from the financial institution account database 14. When the account 77 is the specific account, the financial institution processing device 13 for the account 73 electronically records the transfer log information to the financial institution account database 14. At this occasion, the log information is recorded to the financial institution account database 14 in such a manner as to allow the account 77, i.e., the transfer recipient, to be identified as the specific account. Moreover, when the financial institution account database 14 includes information indicating that the operator is a point card member of the above retail store F, a point corresponding to the purchased amount is added and the point information is rewritten. Further, the financial institution processing device 63 for the account 77 records the deposit log to the financial institution account database 64 (S86).

Thereafter, the retail store processing device 76 prints and outputs a receipt (S87), disconnects connection with the IC card 1, and terminates the processing (S88).

The balance of the account 73 is less than the predetermined amount, the retail store processing device 76 displays that the balance is insufficient (S89), disconnects connection with the IC card 1, and terminates the processing (S88).

As described above, in the present embodiment, the log of the transfer using the debit card settlement can be electronically recorded in such a manner that it is possible to determine whether the transfer recipient is a specific account or not. As a result, the summation of the transfers to the specific account within a particular period can be calculated. In addition, when an amount is transferred to the specific account, the company identification code of the account holder of this specific account may be recorded together, so that the deposit histories of the company having the specific account can be measured more reliably.

### Third Embodiment

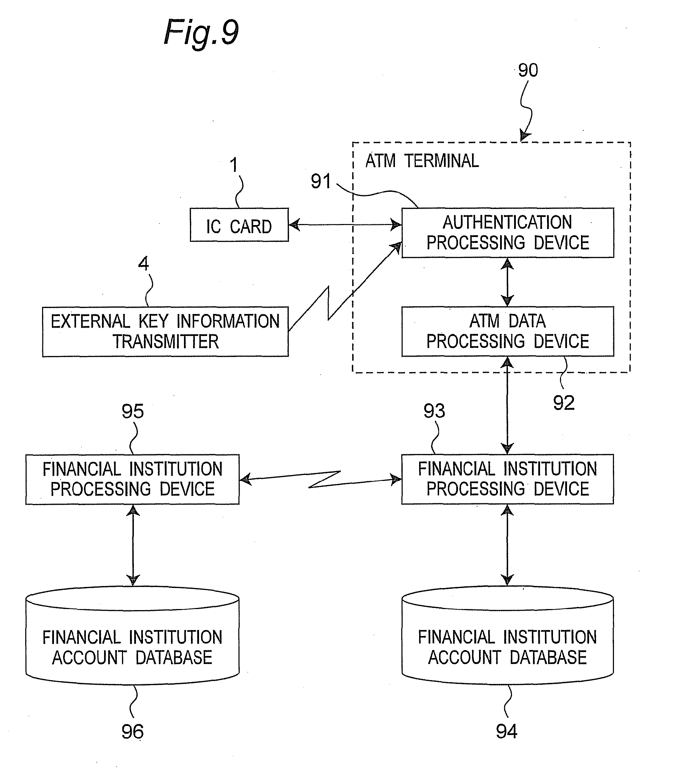

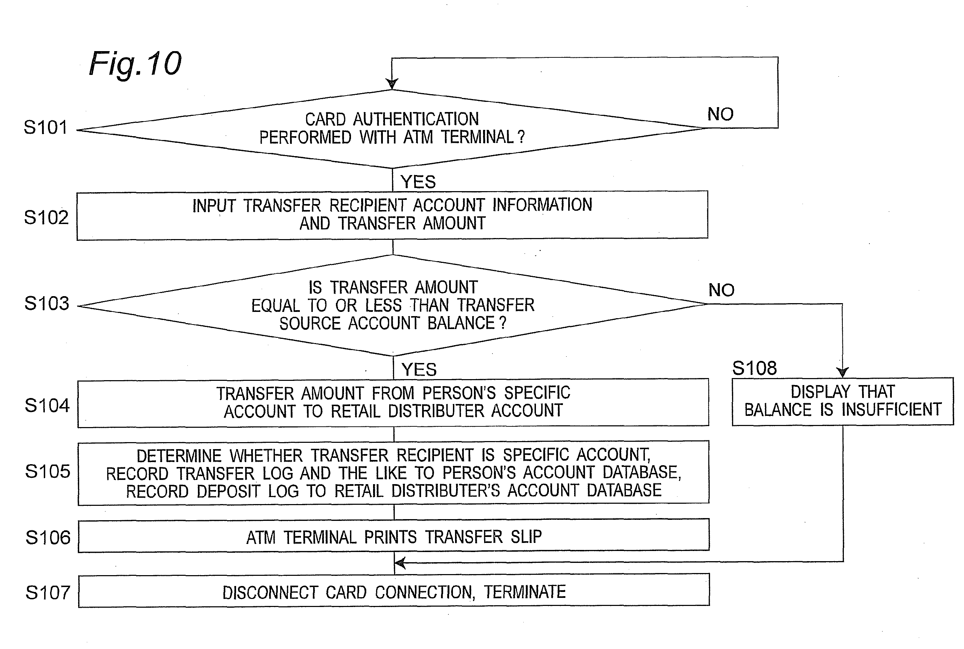

Another example of an embodiment of the above-described electronic settlement using the specific account will be explained. More specifically, the following case will be explained using Fig. 9 and Fig. 10: an amount is transferred from a specific account owned by a person who purchases an item from a retail distributer by directly operating a processing device (such as an ATM) of a financial institution.

In Fig. 9, the person B who purchases an item electrically connects the IC card 1 to an ATM terminal 90 of a financial institution that manages the specific account owned by the person B. An authentication processing device 91 included in the ATM terminal 90 receives external key information transmitted from the external key information transmitter 4, and uses the external key information to inspect whether the IC card 1 is genuine and whether the operator is the owner of the IC card 1 (S101). When the IC card 1 is not correctly authenticated, connection with the IC card 1 is disconnected, and the processing is terminated (S107).

When the authentication is correctly completed, an ATM data processing device 92 prompts the operator to input a transfer amount and transfer recipient account information, and the operator inputs the inputted information (S102). The ATM data processing device 92 transmits the input information to a financial institution processing device 93, and looks up a financial institution account database 94 to inspect whether a balance equal to or more than the transfer amount is remaining in the account of the person B (S103). When the balance is determined to be insufficient, the ATM data processing device 92 disconnects connection with the IC card 1 and terminates the processing (S107).

The financial institution processing device 93 communicates with a financial institution processing device 95 managing the account of the retail distributer, and transfers the input amount from the specific account of the person B to the account of the retail distributer according to the above input information (S104).

When the transfer processing is completed, the financial institution processing device 93 determines whether the account of the retail distributer is a specific account. When the account of the retail store is determined to be a specific account, the financial institution processing device 93 records the log information of the transfer, together with information indicating whether the transfer recipient is a specific account or not, to the financial institution account database 94. Further, the financial institution processing device 95 records the log of the deposit to a financial institution account database 96 (S105). Subsequently, the ATM terminal 90 prints and outputs a transfer slip (S106), disconnects connection with the IC card 1, and terminates the processing (S107).

In the above explanation, the transfer using the ATM terminal has been explained. However, the transfer can also be processed in the same manner even when it is an automatic withdrawal service or a transfer through net banking performed on a personal computer.

Subsequently, the initial setting of the authentication will be explained using Fig. 1.

In the initial state of the IC card 1 right after it is issued, the account information 3a and , as necessary, credit card number information, and expiration date information are recorded in the memory unit 3 in such a manner that the information is encrypted through a predetermined procedure using a PIN number of the account previously registered. Further, information indicating that the IC card 1 is in the initial state is also recorded at a predetermined section of the memory unit 3.

When the IC card in this initial state is electronically connected to the financial institution card terminal 10, the financial institution card terminal 10 detects that the IC card 1 is in the initial state, and requests input of both of or any one of the biometrics authentication information and the external key information transmitted by the external key information transmitter 4.

When the biometrics authentication information is input, a portion of a body of the user used for the biometrics authentication is held above an input unit of the financial institution authentication processing device 11. When the financial institution authentication processing device 11 reads the biometrics information, the financial institution authentication processing device 11 encrypts this biometrics information through a predetermined procedure and records the biometrics information to the biometrics authentication information 3h via the input/output unit 2.

When the external key information is input, the external key information transmitter 4 is brought in proximity to a receiver unit of the authentication processing device 11 of the financial institution card terminal 10. In addition to a dedicated external key information transmitter, a cellular phone transmitting an ID signal at a regular interval and a wireless electronic key of automobile can also be used as the external key information transmitter 4. When any one of the external key information transmitters 4 is brought in proximity to the above receiver unit, the authentication processing device 11 automatically recognizes or manually selects the type of the external key information transmitter 4, and extracts information to be used as the external key information from the reception signal. When the external key information is extracted, the information initially recorded in the memory unit 3 is encrypted with this external key information again, and these are rewritten. Further, information indicating the type of the external key information transmitter 4 is recorded to the card key information 3i. When recording process of them is completed, the information indicating that the IC card 1 is in the initial state is deleted, and the registration process of the authentication information is terminated. When the registration process of the authentication information is completed as described above, the type of the external key information transmitter 4 can be determined from the card key information 3i in the next and subsequent authentications, and therefore, the external key information can be swiftly extracted.

By previously registering the biometrics authentication information, the key information can be updated. In such case, after the biometrics authentication of the IC card 1 is completed on the financial institution card terminal 10, a menu option for updating the external key information is selected, and the external key information transmitter 4 is brought in proximity to the receiver unit. Then, the type of the external key information transmitter 4 is determined from the reception signal, and the key information is extracted. The registration of the authentication information is updated by rewriting the information recorded in the memory unit 3 based on this information in the same manner as the process performed at the initial registration of the authentication information.

In the above described embodiments, the retail store and the retail distributer are assumed to receive payment of the purchased amount from the person. However, the recipient of the payment is not limited to the above retail stores and distributers. The reason why only the transfers to the registered specific accounts are calculated as consumption expenditure is to eliminate spoofing of the consumption expenditure that may be achieved by transferring amounts to another account owned by the same person. Therefore, the specific accounts may be registered by any method as long as it is ensured that the method cannot be used for spoofing expenditure. For example, when a company already doing a large amount of business with the financial institution can be sufficiently trusted, the financial institution may decide by itself to register the account of the company as a specific account even if the account holder of the account does not apply registration.

According to the above embodiments, one IC card can be used for various kinds of usages such as electronic money, a debit card, a credit card, a point card, a transportation ticket, and the like. When the number of terminals for the card increases, people can go out with only one card without carrying a wallet. In addition, when a society in which cash is hardly needed is achieved, it can be effective means for preventing damages caused by counterfeit money.

Further, the IC card according to the present application using, e.g., both of the biometrics authentication and the external key information transmitter achieves an extremely high degree of safety. Signature and input of the PIN number are not necessary not only in the settlement achieved by the pre-charged electronic money but also in the settlement achieved by the debit card and the credit card, and therefore, the settlement can be performed in a shorter time. In addition, with the use of the external key information transmitter, a person who hesitates to use biometrics authentication does not have to use the biometrics authentication except for the initial registration, and a high degree of safety can be provided.

Further, in a settlement through transfer from a specific account, it is possible to determine that the transfer is from the specific account based on the account information. Therefore, in such consumption expenditure, it is possible to apply a consumption tax rate different from a rate for other consumption expenditures in general. In this case, it is possible to enhance the propensity to consume by applying a different taxation system having a high consumption tax rate instead of deducting the consumption expenditure paid from the specific account from the taxable income. In addition, since the amount of consumption expenditure can be correctly measured, this may serve as redistribution of income by introducing progressive taxation to the consumption tax.

### Fourth Embodiment

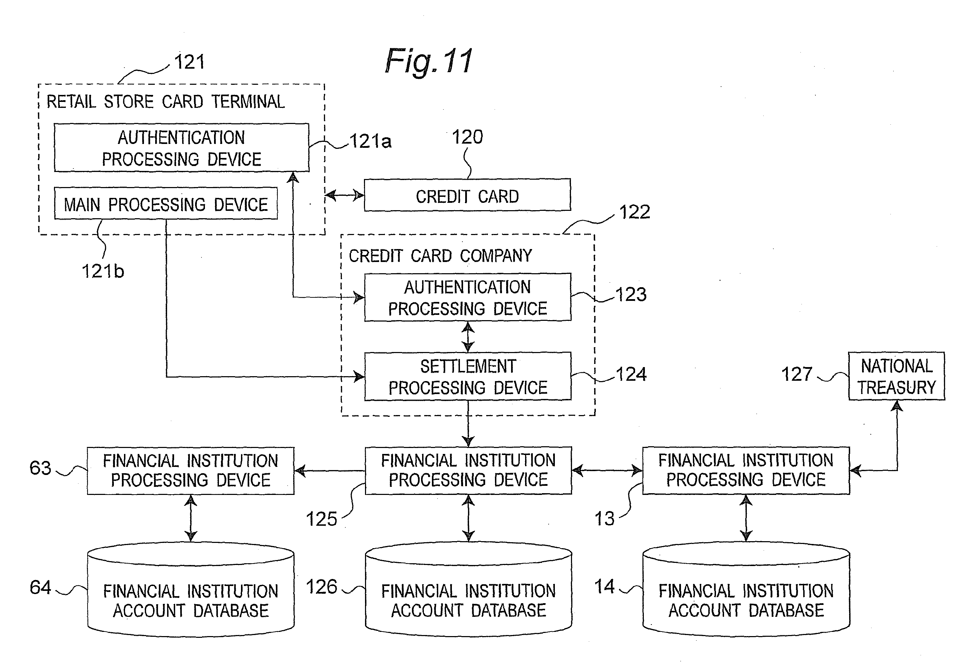

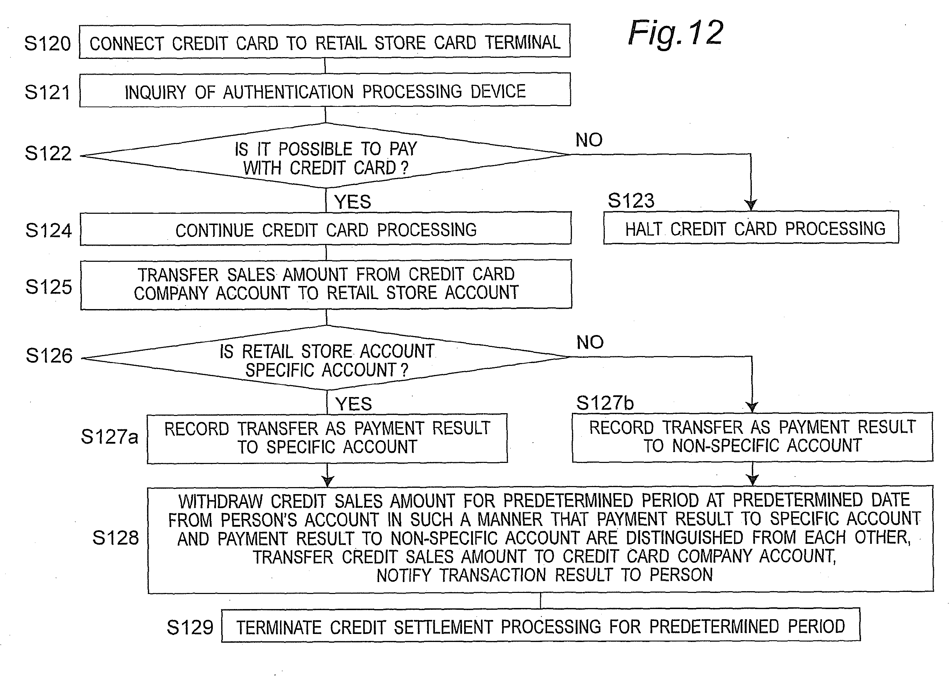

Still another embodiment of the electronic settlement using the specific account will be explained. More specifically, with reference to Fig. 11 and Fig. 12, a case will be explained where an item is purchased from a retail distributer using a credit card.

In Fig. 11, a person who purchases an item is assumed to purchase an item in a retail store using a credit card 120. At this occasion, the retail distributer electronically connects the credit card 120 to a retail store card terminal 121 (S120). The method of connection may be a method for inserting the credit card 120 to bring it to be in contact with the contact points, or may be a method for bringing the IC card in proximity of the retail store card terminal 121 to perform wireless communication. When connection between the credit card 120 and the retail store card terminal 121 is established, an authentication processing device 121a of the retail store card terminal 121 accesses an authentication processing device 123 of a credit card company 122 (S121), and determined whether the credit card 120 is effective or whether the credit limit amount is equal to or more than the purchased amount (S122).

When the credit card 120 cannot be used for purchasing the item, a main processing device 121b of the retail store card terminal 121 halts the processing of the credit card (S123). In other words, the retail distributor stops selling using the credit card. On the other hand, when the credit card 120 is determined to be usable, the main processing device 121b continues processing of the credit card (S124). In other words, the retail distributor provides the item, inputs the purchased amount with the retail store card terminal 121, and completes the selling process.

When a settlement processing device 124 of the credit card company 122 receives the information about the price input from the retail store card terminal 121 and the information about the retail store, the settlement processing device 124 instructs a financial institution processing device 125 to transfer the equivalent amount from the bank account in the credit card company 122 to the bank account of the above retail store. According to the instruction, the financial institution processing device 125 cooperates with a financial institution processing device 63 of a financial institution that has a bank account of the retail store, so as to transfer the instructed price of the bank account in the credit card company 122 to the bank account of the retail store (S125).

The financial institution processing device 125 of the financial institution managing the bank account in the credit card company 122 inquires of the financial institution processing device 63 whether the bank account of the retail store is a specific bank account (S126). The financial institution terminal processing device 125 records, to the financial institution terminal processing device 126, the result of the transfer including information indicating whether the bank account of the retail store of the transfer recipient is a specific account or not (S127a, S127b).

The financial institution processing device 125 calculates a summation amount of the use of the credit card within a predetermined period for each person using the credit card, and cooperates with the financial institution processing device 13 of the financial institution managing the above person's bank account, so as to withdraw the above summation amount from the person's bank account. When the account is determined to be a specific account, the financial institution processing device 13 updates the log information of the specific account information in the financial institution account database. At this occasion, the financial institution processing device 125 transmits the log information of the payment, including information capable of distinguishing whether the account of the retail store receiving the payment is a specific account or not, to the financial institution processing device 13 (S128). The credit settlement processing in the above predetermined period is terminated (S129).

### Fifth Embodiment

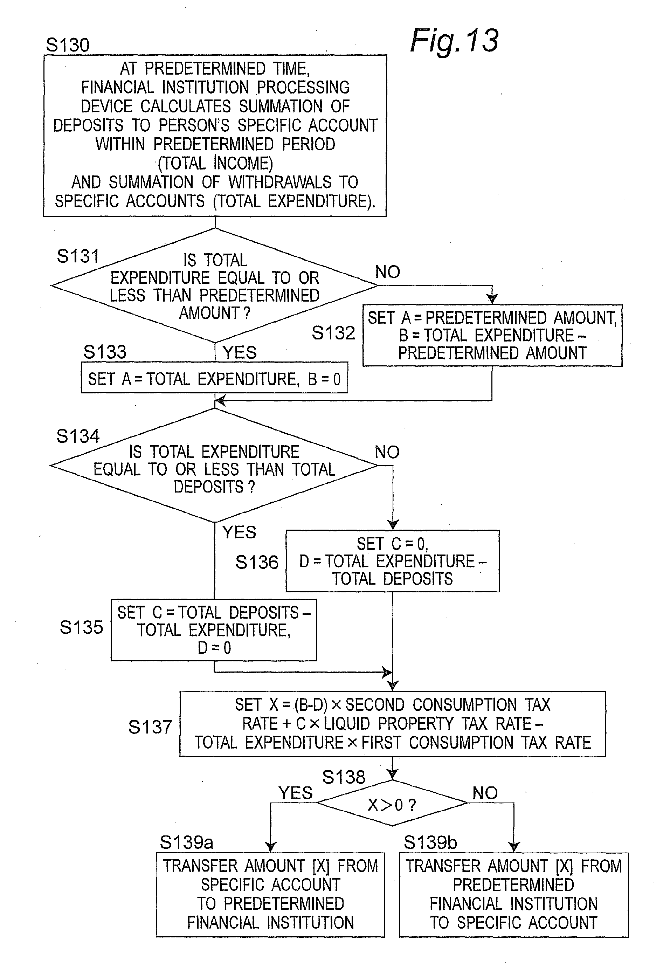

Subsequently, a method using the electronic settlement system explained in the above embodiments in order to realize a taxation system in which both of a new individual taxation system and a conventional taxation system can coexist in a selectable manner will be explained using a flowchart of Fig. 13. The above new individual taxation system is a taxation system (hereinafter referred to as "consumption and monetary asset taxation system") in which importance is given to the consumption tax instead of the income tax, and a monetary asset tax is newly imposed on increase of saving. This kind of new taxation system can be achieved only when the electronic settlement system explained in the above embodiments are used.

First, a person can select, in advance, whether he pays the tax according to the conventional taxation system or the consumption and monetary asset taxation system. When a person chooses the new taxation system, a specific bank account is opened in a predetermined financial institution. The consumption and monetary asset taxation system is operated according to the following rules.
(1) All deposits to the specific bank account of the person are deemed as income, and all other incomes are declared separately.
(2) Only the transfers to other specific accounts are deemed as expenditure.
(3) A second consumption tax larger than the consumption tax(first consumption tax) in the conventional taxation system is imposed on the total amount of expenditure.
(4) An amount calculated by subtracting the total expenditure from the total income is deemed as an increase of saving, and the monetary asset tax is imposed on this amount.

The above is the summary of the consumption and monetary asset taxation system. However, the above does not have a redistribution function such as progressive taxation of the income tax of the conventional taxation system. For redistribution, a method for evenly returning a predetermined amount defined based on family structure and a method for reduction or exemption of the consumption tax up to a predetermined consumption amount is considered, but in the present embodiment, the following rule is further arranged.
(5) The consumption tax is free up to a predetermined consumption amount.

When a predetermined period for deciding the amount of tax passes, the financial institution processing device 13 of the financial institution managing the person's specific bank account accesses the financial institution account database 14, and calculates a summation of the payment amounts to the specific accounts within the person's predetermined period and the summation of the received amounts within the predetermined period (S130). In the present embodiment, the summation of the received amounts is deemed as the total income, and the summation of the payment amounts to the specific accounts is deemed as the total expenditure. The financial institution processing device 13 inspects whether the total expenditure is equal to/less than or more than the predetermined amount, i.e., the upper limit of the consumption amount below which the consumption tax is free (S131). When the total expenditure is more than the predetermined amount, the financial institution processing device 13 adopts this predetermined amount as a tax-exempt consumption amount (A) below which the consumption tax is free, and adopts the remainder obtained by deducting the tax-exempt consumption amount (A) from the total expenditure as a tax-imposed consumption amount (B) (S132). When the total expenditure is equal to or less than the above predetermined amount, the financial institution processing device 13 adopts this total expenditure as the tax-exempt consumption amount (A) and makes the tax-imposed consumption amount (B) zero (S133).

Subsequently, the financial institution processing device 13 compares the total expenditure and the total income (S134). When the total expenditure is equal to or less than the total income, the financial institution processing device 13 adopts [the total income - the total expenditure] as a saving increase amount (c) (S135). When the total expenditure is more than the total income, the financial institution processing device 13 adopts [the total expenditure - the total income] as a saving decrease amount (D) (S136).

In the present embodiment, the conventional taxation system and the consumption and monetary asset taxation system are assumed to coexist, and the income tax is not imposed in the consumption and monetary asset taxation system. Therefore, the second rate, i.e., the consumption tax rate in the consumption and monetary asset taxation system, is configured to be larger than the first rate, i.e., the consumption tax rate in the conventional taxation system. In the consumption and monetary asset taxation system, a monetary asset tax of a third rate is further imposed on the saving increase amount (C). When the consumption tax is imposed in the saving decrease (D) portion in the consumption and monetary asset taxation system, the monetary asset taxation and the consumption tax imposed on the saving decrease (D) portion is double charging. Therefore, the consumption tax is substantially not imposed the saving decrease (D). However, if the tax collection amount of the consumption tax at the retail store is different according to whether the client is a tax payer according to the conventional taxation system or a tax payer according to the consumption and monetary asset taxation system, this brings about confusion, and results in an extremely complicated calculation of the amount of the consumption tax to be paid by the company. In order to avoid such circumstances, the retail store should pay the consumption tax at a constant tax rate regardless of the clients. Therefore, in the present embodiment, the retail store collects a first consumption tax at a constant rate.

According to the above procedure, the amount of tax in the consumption and monetary asset taxation system is calculated. In other words, the consumption tax imposed on the amount obtained by subtracting the saving decrease (D) from the tax-imposed consumption amount (B) obtained by deducting the tax-exempt consumption amount from the total expenditure is [(B-D) × Second consumption tax rate]. The monetary asset taxation is calculated by [Saving increase amount (C) × Monetary asset taxation rate]. Further, the first consumption tax to the total expenditure already paid by the retail store needs to be returned back. The amount of return is calculated by [Total expenditure × First consumption tax rate]. Therefore, the total amount of the tax is [Second consumption tax amount + Monetary asset taxation amount - Already paid first consumption tax] (S137). When the total amount of the tax is a positive value, the total amount of the tax is transferred from the person's specific bank account to a predetermined financial institution acting for the National Treasury (S139a). In other words, the financial institution processing device 13 instructs transfer processing of the total amount of the tax to the account of the National Treasury managed by the predetermined financial institution. When the total amount of the tax is a negative value, the absolute value thereof is refunded to the person's specific bank account from the National Treasury (S139b). In other words, the predetermined financial institution instructs the financial institution processing device 13 to transfer the refund to the person's specific bank account.

According to the present embodiment, the monetary asset taxation is introduced, so that effective means can be provided to solve consumer's recession by enhancing consumer's consuming mind. Further, since the consumption tax plays the principle role, the tax can be collected more reliably than the income tax based on the income which is uncertain to be measured. Therefore, the system can be designed so as to reduce the tax burden placed on people who have been correctly paid the tax and at the same time increase the total amount of tax revenue. Further, since the system can coexist with the conventional taxation system, there is an effect of easily introducing the system.

In the present embodiment, the consumption tax is free up to the predetermined amount of consumption, as means for redistribution. However, if a predetermined amount determined based on family structure is evenly refunded all households, it is not necessary to perform processing for refunding the already paid amount of the consumption tax corresponding to the tax-exempt consumption amount. The consumption tax with respect to the tax-exempt consumption amount is free. Alternatively, the consumption tax may not be free but may be the first consumption tax, so that it is not necessary to perform processing for refunding the already paid consumption tax.

In the above embodiment, the specific account flag is used to indicate the specific account. Alternatively, a predetermined range of account numbers may be assigned to the specific accounts, so that the account number can carry information equivalent to the specific account flag.

In each of the above embodiments, the financial institution card terminal 10, the retail store card terminal 15, ..., the financial institution processing devices 13, 18, ..., and the like may be constituted by a computer (including control unit such as a CPU and memory unit such as a memory), and their functions may be achieved by executing a predetermined program. In addition, such program may be provided as a computer-readable information recording medium such as a CD-ROM and a DVD-ROM or a communication medium.

### Brief Description of Drawings

Fig. 1 is a configuration diagram showing an electronic settlement system according to the first embodiment.
Fig. 2A is a figure for explaining an example of information recorded in an IC card according to the first embodiment.
Fig. 2B is a figure for explaining an example of specific account information managed in a financial institution account database according to the first embodiment.
Fig. 3 is a figure for explaining an example of flow of monetary value in an electronic settlement according to the first embodiment.
Fig. 4 is a flowchart showing processing for charging of electronic money to an IC card.
Fig. 5 is a flowchart showing payment processing in the electronic settlement processing using the IC card.
Fig. 6 is a configuration diagram showing an electronic settlement system using a debit card method according to the second embodiment.
Fig. 7 is a figure for explaining a flow of monetary value in a debit card settlement.
Fig. 8 is a flowchart showing processing for performing debit card settlement.
Fig. 9 is a configuration diagram showing an electronic settlement system according to the third embodiment, wherein transfer processing is performed directly from a specific account.
Fig. 10 is a flowchart showing settlement processing according to the third embodiment.
Fig. 11 is a configuration diagram showing an electronic settlement system using a credit card according to the fourth embodiment.
Fig. 12 is a flowchart showing settlement processing performed with a credit card.
Fig. 13 is a flowchart showing tax payment processing according to the fifth embodiment.
Fig. 14 is a configuration diagram showing a conventional electronic money system.

## Claims

1. An electronic settlement method for causing an electronic settlement device to electronically transfer a predetermined amount of monetary value from a first account to a second account, the electronic settlement method comprising:
a first step for inspecting whether the second account is a specific account of which account holder can be identified; and
a second step for electronically recording log information about the transfer to a predetermined storage unit, while associating the log information with the first account in such a manner as to allow the transfer recipient to be identified as the specific account, when the second account is determined to be the specific account.

2. The electronic settlement method according to claim 1, wherein the log information of the transfer includes identification information of the account holder of the second account.

3. An electronic settlement method for causing an electronic settlement device to electronically transfer a predetermined amount of monetary value from a first account to a second account, the electronic settlement method comprising:
a first step for inspecting whether the first account is a specific account having functions for identifying an account holder of the specific account and receiving an electronically-transmitted electronic receipt;
a second step for transmitting the electronic receipt from the second account to the first account, when the first account is a specific account; and
a third step for receiving the electronic receipt transmitted from the second account, and electronically recording the received electronic receipt, in association with the first account to a predetermined storage unit.

4. An electronic settlement device for electronically transfer a predetermined amount of monetary value from a first account to a second account, the electronic settlement device comprising:
a processor for inspecting whether the second account is a specific account of which account holder can be identified, and when the second account is determined to be the specific account, electronically recording log information about a transfer to a predetermined storage unit while associating the log information with the first account in such a manner as to allow a transfer recipient to be identified as the specific account when the second account is determined to be the specific account of which account holder can be identified.

5. The electronic settlement device according to claim 4, wherein the log information of the transfer includes identification information of the account holder of the second account.

6. The electronic settlement device according to claim 5, wherein the processor has a function of calculating a summation of payments to the first account within a predetermined period and a summation of transfers to accounts having a predetermined attribute within a predetermined period.

7. An electronic settlement device for electronically transfer a predetermined amount of monetary value from a first account to a second account, the electronic settlement device comprising:
a processor for inspecting whether the first account is a specific account capable of receiving an electronically-issued electronic receipt, and when the first account is determined to be the specific account, transmitting an electronic receipt according to the electronically transferred amount from the second account to the first account.

8. An electronic settlement device for electronically transfer a predetermined amount of monetary value from a first account to a second account, the electronic settlement device comprising:
a processor, for electronically recording information about this electronic receipt to a predetermined storage unit while associating the information with the first account, when the first account receives a electronically-issued electronic receipt from the second account.

9. The electronic settlement device according to claim 8, wherein the processor has a function of calculating a summation of payments to the first account within a predetermined period and a summation of the received electronic receipts within a predetermined period.

10. An electronic settlement method for causing an electronic settlement device to perform an electronic settlement between a predetermined bank account and a predetermined financial institution, the electronic settlement method comprising the steps of:
calculating a summation of amounts deposited to the predetermined bank account within a predetermined period;
calculating a summation of amounts transferred within the predetermined period from the predetermined bank account to a bank account of which account holder is different from the account holder of the predetermined bank account;
calculating a first amount by multiplying the summation or part of the transferred amounts by a first rate less than one;
calculating a second amount by multiplying, by a second rate less than one, an amount obtained by deducting the summation of the transferred amounts from the summation of the deposited amounts; and
executing processing for transferring a summation of the first amount and the second amount to the predetermined financial institution.

11. The electronic settlement method according to claim 10, wherein in the step for calculating the first amount, the first amount is calculated by multiplying, by the first rate, an amount obtained by deducting a predetermined deduction amount from the summation of the transferred amounts.

12. The electronic settlement method according to claim 10, wherein in the step for calculating the first amount, the first amount is calculated by multiplying the summation or part of the transferred amounts, by a rate obtained by subtracting a third rate less than the first rate from the first rate.

13. The electronic settlement method according to claim 10, wherein in the step for calculating the first amount, the first amount is calculated by multiplying, by a rate obtained by subtracting a third rate less than the first rate from the first rate, an amount obtained by deducting a predetermined deduction amount from the summation of the transferred amounts.

14. The electronic settlement method according to claim 11 further comprising a step of performing either one of: a processing for transferring an amount obtained by multiplying a predetermined deduction amount by the third rate, from the predetermined financial institution to the predetermined bank account; and a processing for offsetting the amount obtained by multiplying the predetermined deduction amount by the third rate with an amount transferred from the predetermined bank account to the predetermined financial institution.

15. The electronic settlement method according to claim 13 further comprising a step of performing either one of: a processing for transferring an amount obtained by multiplying the predetermined deduction amount by the third rate, from the predetermined financial institution to the predetermined bank account; and a processing for offsetting the amount obtained by multiplying the predetermined deduction amount by the third rate with an amount transferred from the predetermined bank account to the predetermined financial institution.

16. The electronic settlement method according to claim 10, wherein in the step for calculating the summation of the transferred amounts, in a case where the transfer recipient is an account of a credit card company, an amount of a transfer is included in the summation only when a recipient of the transfer from the credit card company satisfies a predetermined condition.

17. An electronic settlement device for performing an electronic settlement between a predetermined bank account and a predetermined financial institution, the electronic settlement device comprising:
a unit for calculating a summation of amounts deposited to the predetermined bank account within a predetermined period;
a unit for calculating a summation of amounts transferred within the predetermined period from the predetermined bank account to a bank account of which account holder is different from the account holder of the predetermined bank account;
a unit for calculating a first amount by multiplying the summation or part of the transferred amounts by a first rate less than one;
a unit for calculating a second amount by multiplying, by a second ratio less than one, an amount obtained by subtracting the summation of the transferred amounts from the summation of the deposited amounts; and
a unit for executing processing for transferring a summation of the first amount and the second amount to the predetermined financial institution.

18. The electronic settlement device according to claim 17, wherein the unit for calculating the first amount calculates the first amount by multiplying, by the first rate, an amount obtained by deducting a predetermined deduction amount from the summation of the transferred amounts.

19. The electronic settlement device according to claim 17, wherein the unit for calculating the first amount calculates the first amount by multiplying, by a rate obtained by subtracting a third rate less than the first rate from the first rate, the summation of the transferred amounts or a portion thereof.

20. The electronic settlement device according to claim 17, wherein the unit for calculating the first amount calculates the first amount by multiplying, by a rate obtained by subtracting a third rate less than the first rate from the first rate, an amount obtained by deducting a predetermined deduction amount from the summation of the transferred amounts.

21. The electronic settlement device according to claim 18 further comprising a unit for performing either one of: a processing for transferring an amount obtained by multiplying the predetermined deduction amount by the third rate, from the predetermined financial institution to the predetermined bank account; and a processing for offsetting the amount obtained by multiplying the predetermined deduction amount by the third rate with an amount transferred from the predetermined bank account to the predetermined financial institution.

22. The electronic settlement device according to claim 20 further comprising a unit for performing either one of: a processing for transferring an amount obtained by multiplying the predetermined deduction amount by the third rate, from the predetermined financial institution to the predetermined bank account; and a processing for offsetting the amount obtained by multiplying the predetermined deduction amount by the third rate with an amount transferred from the predetermined bank account to the predetermined financial institution.

23. The electronic settlement device according to claim 17, wherein in a case where the transfer recipient is an account of a credit card company, the unit for calculating the summation of the transferred amounts causes an amount of a transfer to be included in the summation only when a recipient of the transfer from the credit card company satisfies a predetermined condition.
